# EUROPÄISCHE PATENTSCHRIFT

(11) **EP 1 914 664 B1**
(45) Veröffentlichungstag und Bekanntmachung des Hinweises auf die Patenterteilung: **01.10.2008**
(21) Anmeldenummer: 06022015.9
(22) Anmeldetag: 20.10.2006
(51) Int. Cl.: G06K 7/08

(54) **Identifikationsvorrichtung für Gegenstände mit einem Transponder und entsprechendes Verfahren**
Object identification device with a transponder and corresponding method
Dispositif d'identification pour objets à l'aide d'un transpondeur et procédé correspondant

(43) Veröffentlichungstag der Anmeldung: 23.04.2008
(73) Patentinhaber: Datamars SA, 6930 Lugano (CH)
(72) Erfinder: Di Domenici, Mauro, 6804 Bironico (CH); Brilli, Nicola, 6944 Cureglia (CH)
(74) Vertreter: Kleinschmidt, Michael

(56) Entgegenhaltungen:
- US-A1- 2004 036 623
- US-A1- 2004 164 864

## Beschreibung

### Technisches Gebiet

Die Erfindung betrifft eine Identifikationsvorrichtung für Gegenstände mit einem Transponder, gemäss dem Oberbegriff nach Anspruch 1, sowie ein entsprechendes Identifikationsverfahren.

### Stand der Technik

Unter einem Transponder versteht man üblicherweise ein Kommunikationselement, das eingehende Signale aufnimmt und darauf antwortet. Der Begriff Transponder wurde dabei zusammengesetzt aus den englischsprachigen Begriffen "Transmitter" und "Responder". Transponder können passiv oder aktiv sein.

Unter passiven Transpondern versteht man Systeme, die die zur Kommunikation und zur Abarbeitung interner Prozesse benötigte Energie ausschließlich aus dem Feld der Schreib-/Leseeinheit beziehen. Passive Transponder arbeiten also eigenenergielos. Aktive Systeme verfügen dagegen über eine eigene Energieversorgung oft in Form einer Batterie. Neben den Reinformen passiver beziehungsweise aktiver Systeme existieren semiaktive Transponder. Im Folgenden wird der Begriff Transponder im Sinne eines passiven Transponders verwendet.

Ein passiver Transponder erlaubt es, ein Objekt zu identifizieren. Haustierregistrierungselemente, die den Haustieren z.B. eingepflanzt werden können, sind Beispiele hierfür. Eine aktive Empfangs- und Leseeinheit, in Verbindung mit einer Speicherelektronik oder einem Computer, liest und decodiert die Daten, die der passive Transponder enthält. Solche Transponder erfüllen dann teilweise internationale Normen, z.B. DIN/ISO 11784/11785 (FDX-B), und sind mit Handlesegeräten einfach auslesbar.

Für andere Anwendungen, wie z.B. für die Identifizierung von Wäsche in einem Waschbetrieb industrieller Grösse wird dagegen üblicherweise nicht jedes Wäschestück, welches einen Transponder aufweist, mit einem Handlesegerät getrennt erfasst. Vielmehr werden hier üblicherweise die Wäschestücke in einen Behälter - oder alternativ auch nur auf ein Transportband - geladen und eine l-dentifizierungseinrichtung soll dann in der Lage sein, sämtliche Wäschestücke, die sich in diesem Behälter befinden, zu erfassen und deren Code zu speichern. Dabei treten zahlreiche Schwierigkeiten auf.

Bei der Anwesenheit einer Vielzahl von Transpondern ist die Leseeinrichtung einer Vielzahl von zurückgesendeten Codes ausgesetzt, die systembedingt grundsätzlich alle mit der gleichen Frequenz gesendet werden. Es sind also Massnahmen zu ergreifen, diese zurückgesendeten Codes zu unterscheiden und die Unterscheidung auch möglichst System gemäss zu unterstützen. Dabei steht zunächst einmal ein so genannter "Quiet mode" zur Verfügung. Wenn nämlich der Transponder identifiziert ist, so ist es möglich, ihm einen Befehl zu übermitteln, der bewirkt, dass der Transponder seinen Code nicht mehr zurücksendet, solange wie er sich diesen Befehl merken kann. Diese Betriebsart funktioniert bei einem rein passiven Transponder selbstverständlich nur solange, wie der Transponder energieversorgt ist. Mit diesen, hinlänglich bekannten Massnahmen kann zunächst einmal eine sehr grosse Anzahl von Transpondern in einem Ensemble identifiziert werden.

Um eine möglichst grosse Durchlaufgeschwindigkeit des Behälters durch die Förderanlage zu ermöglichen, wird in der JP-A-11-149528 vorgeschlagen, die Transportbandgeschwindigkeiten mit der Leserate zu verknüpfen und entsprechend zu regeln, ohne dass damit die nachfolgend beschriebenen Probleme gelöst werden könnten.

Weitere Probleme treten nämlich dadurch auf, dass die vom Lesegerät grundsätzlich zu verwendenden H-Feld Antennen, nämlich üblicherweise Spulen, die in die Nähe des Ensembles gebracht werden, mit solchen Antennen der Transponder nicht in Wechselwirkung treten können, deren Spulenebene zur Spulenebene der Antennenspulen des Lesegeräts senkrecht oder in einem sehr grossen Winkel stehen. Dieses Problem gilt es ebenfalls zu lösen.

In der JP-A-2004-244140 wird eine Antennenanordnung vorgeschlagen, bei der in einem bestimmten Winkel von ca. 90° zwei Antennen angeordnet sind, wobei sich die Spulen der beiden Antennen an einer Seite berühren oder zumindest einen sehr geringen Abstand aufweisen. Damit wird versucht, dass die Transponder mit unterschiedlicher Ausrichtung besser erfasst werden können.

In der EP-A-1 688 863 wird vorgeschlagen, einen mit einer Vielzahl von Transponder aufweisenden Gegenständen befüllten Behälter auf einem Förderband durch einen Tunnel zu schicken, um den herum drei Antennen angeordnet sind. Dabei soll eine erste Antenne, die am Tunneleingang quer um den Tunneleingang herum angeordnet sein. Eine zweite Antenne soll direkt hinter dem Tunneleingang auf einer Seite des Tunnels beginnend in einem Winkel von ca. 45° angeordnet sein und sich in Transportrichtung gesehen auf der anderen Seite des Tunnels bis ungefähr bis zum Tunnelende erstrecken. Eine dritte Antenne soll direkt hinter dem Tunneleingang auf der anderen Seite des Tunnels beginnend in einem Winkel von ca. 45° angeordnet sein und sich in Transportrichtung gesehen auf der ersten Seite des Tunnels bis ungefähr bis zum Tunnelende - quasi gekreuzt zur zweiten Antenne angeordnet - erstrecken. Weiterhin weist die in der EP-A-1 688 863 vorgeschlagene Antennenanordnung eine die Unterseite des Tunnels überdeckende Antenne auf. Insbesondere die Antenne, die nicht um den Tunnel herum angeordnet ist, hat sich dabei als nicht vorteilhaft herausgestellt, da sie zur Identifizierung der Transponder nicht viel beizutragen in der Lage ist. Eine der gekreuzten Antennenanordnung sehr ähnliche Anordnung ist aus der JP-A-2004-192223 bekannt, die aber ansonsten keine weiteren Vorteile zur Lösung der auftretenden Probleme anbieten kann.

Eine aufwändige Weiterentwicklung dieser Lösung ist in US-A-2004/0036623 angegeben. Dort wird zunächst einmal eine Vielzahl von Antennen flächig um den Tunnel herum so angeordnet, dass die Antennenebenen parallel zu den Tunnelwänden sind. Diese Antennen können zur Lösung des oben genannten Problems nicht viel beitragen. Weiterhin sind auch Tunnelantennen vorgesehen, die Antennenspulen, die den Tunnel umschliessen. Eine solche Tunnelantenne soll dabei so angeordnet sein, dass ihre Ebenen senkrecht auf der Normalen des Förderbandes stehen. Weiterhin sind zwei weitere, den Tunnel umschliessende Antennen in der bereits als nachteilig erkannten Art der vorstehend beschriebenen Anordnungen vorgesehen, die in einem bestimmten Winkel stehen und ein annähernd linear unabhängiges System ausbilden, wobei sich die Spulen der beiden Antennen an einer Seite sogar überlappen. Diese Lösung weist zwar eine Vielzahl von Antennen auf, kann aber das nachfolgend beschriebene Problem ebenfalls nicht lösen.

Es ist nämlich noch ein weiteres Problem bekannt, nämlich die Anwesenheit von zwei oder mehr Transpondern in unmittelbarer Nähe zueinander, die sich gegenseitig elektromagnetisch stören, auch wenn sie nicht in gleicher Richtung ausgerichtet sind.

### Darstellung der Erfindung

Aufgabe der Erfindung ist es, eine Identifikationsvorrichtung für Transponder zu schaffen, die in der Lage ist, eine in einem über ein Förderband transportierten Behälter - oder auch nur lose auf dem Förderband - befindliche Vielzahl von Transponder zu identifizieren, und dabei die Probleme der aus dem Stand der Technik bekannten Anordnungen zu vermeiden oder zumindest zu vermindern. Es sollen eine Identifizierung für alle im Behälter - oder lose auf dem Förderband - angeordneten Transponder durchführbar sein. Im Folgenden soll unter einem Behälter jede Einrichtung verstanden werden, die in der Lage ist, Prüfkörper mit einem Transponder aufzunehmen, also z.B. auch Wäschesäcke etc.

Die Aufgabe der Erfindung wird durch eine Identifikationsvorrichtung für Gegenstände mit einem Transponder nach Anspruch 1 gelöst. Dabei haben die Massnahmen der Erfindung zunächst einmal zur Folge, dass mit der Identifikationsvorrichtung eine Vielzahl Transponder in einer beliebigen Orientierung im Antennentunnel identifiziert werden können, wobei die Sende- und Empfangseinrichtung so eingerichtet ist, dass die Antennen im Zeittastverfahren bedienbar sind. Ein solches Verfahren wird auch Multiplexverfahren genannt. Dabei haben die Massnahmen der Erfindung weiterhin zur Folge, dass nicht nur die Elektronik optimal genutzt werden kann, sondern es werden zudem auch die Überschneidungen der einzelnen Antennen-/Transponder-Wechselwirkungen minimiert.

Vorteilhafte Ausgestaltungen der Identifikationsvorrichtung gemäss der vorliegenden Erfindung sind in den abhängigen Ansprüchen 2 bis 9 dargelegt.

Um dabei einen optimalen zeitlichen Abstand zwischen den Messungen mit den einzelnen Antennen zu erzielen, ist es vorteilhaft, wenn die Antennenebenen innerhalb des Tunnels einen Abstand von zumindest 150 mm aufweisen (Anspruch 2) und die erste Ebene vorzugsweise parallelsenkrecht zur Bewegungsrichtungebene des Förderbandes steht (Anspruch 3).

Die Gegenstände, die die Identifikationsträger tragen, werden üblicherweise in Behältern durch den Tunnel transportiert. Für kleinere Behälter, die nicht grösser sind als der Abstand der ersten Antennenebene zur dritten Antennenebene, bei denen es also nicht wahrscheinlich ist, dass Transponder mit der dritten Antenne schon identifiziert werden, wenn noch andere Transponder mit der ersten Antenne identifiziert werden, ist es vorteilhaft, wenn die Sende- und Empfangseinrichtung so eingerichtet ist, dass sie zunächst die erste Antenne aktiviert. Beim Identifizieren von Transpondern durch die erste Antenne werden möglichst viele Transponder identifiziert und gleichzeitig wird alternierend im Zeittastverfahren die zweite Antenne aktiviert und auch durch diese möglichst viele Transponder identifiziert. Wenn die erste Antenne keine Transponder mehr identifiziert, dann wird alternierend im Zeittastverfahren die dritte Antenne aktiviert und durch die zweite und die dritte Antenne werden solange möglichst viele Transponder identifiziert, bis die zweite Antenne keine Transponder mehr identifiziert. Dann wird die dritte Antenne in Betrieb gehalten, bis sie keine Transponder mehr identifiziert. Dann nimmt die Auswerteeinrichtung die Auswertung und eine Ausgabe und/oder eine Speicherung der Ergebnisse vor (Anspruch 4).

Für grössere Behälter, die grösser sind als der Abstand der ersten Antennenebene zur dritten Antennenebene, bei denen es also wahrscheinlich ist, dass Transponder mit der dritten Antenne schon identifiziert werden, wenn noch andere Transponder mit der ersten Antenne identifiziert werden, ist es vorteilhaft, wenn die Sende- und Empfangseinrichtung so eingerichtet ist, dass sie zunächst ebenfalls eine Antenne aktiviert. Beim Identifizieren von Transpondern durch die erste Antenne werden möglichst viele Transponder identifiziert und gleichzeitig alternierend im Zeittastverfahren die zweite Antenne aktiviert und auch durch diese möglichst viele Transponder identifiziert. In diesem Fall wird aber schon beim Identifizieren von Transpondern mit der zweiten Antenne die dritte Antenne aktiviert. Die erste Antenne wird abschaltet, wenn diese für eine bestimmte Zeit keine Transponder mehr identifiziert, ebenso wird die zweite Antenne abschaltet, wenn diese für eine bestimmte Zeit keine Transponder mehr identifiziert, und die dritte Antenne wird in Betrieb gehalten, bis diese für eine bestimmte Zeit keine Transponder mehr identifiziert. Dann nimmt wiederum die Auswerteeinrichtung die Auswertung und eine Ausgabe und/oder eine Speicherung der Ergebnisse vor (Anspruch 5).

Passive Transponder werden üblicherweise durch das Empfangen eines Signals der Antenne aktiviert, indem in ihnen zunächst einmal eine Stromversorgung aus der Energie der Antenne aufgeladen wird und die Transponder dann ihren Identifikationscode abgeben. Ein wesentlicher Vorteil für die Identifikationsvorrichtung (Anspruch 6) ist es, wenn diese und die Transponder so eingerichtet sind, dass die Identifikationsvorrichtung beim Identifizieren jedes Transponders diesem Transponder den Befehl gibt, in einen Modus ("Quiet Mode") zu schalten, bei dem der Transponder während des Empfangs von Signalen von der Antenne keine Antwort gibt, üblicherweise so lange, wie sich der Transponder im Antennenfeld befindet und dadurch energieversorgt ist. Den Befehl zu einem solchen Modus kann der Transponder also solange befolgen, wie er sich ihn merken kann, was beim Verlassen des Antennenfeldes nicht mehr der Fall ist. Verbessert werden kann dies aber noch, wenn der Transponder einen für die Identifikationsvorrichtung optimierten Modus aufweist ("Quiet Storage Mode"), mit der der Transponder nicht nur während des Empfangs von Signalen, sondern auch noch für eine vorbestimmte Zeit danach keine Antwort gibt. Dazu muss die Identifikationsvorrichtung so eingerichtet sein, dass von ihr ein entsprechender Befehl sendbar ist. Selbstverständlich muss der Transponder dann eine Stromversorgung mit einer entsprechenden Speicherkapazität aufweisen, damit der optimierte Modus eben für eine bestimmte Zeit noch beibehalten werden kann. Die Zeit ist durch die Energiekapazität des Transponders vorgegeben und sollteentspricht dann etwa der Durchlaufzeit durch den Tunnel entsprechen und wird im Bereich von einigen Minuten liegen.

Im Allgemeinen wird die Zahl der Gegenstände im Behälter, der durch den Tunnel befördert wird, genau oder in etwa bekannt sein. Wenn nach dem Durchlauf eines solchen Behälters durch den Tunnel die Zahl der identifizierten Transponder der Zahl der Gegenstände im Behälter, die einen Transponder aufweisen sollten, kann es vorteilhaft sein, nicht entspricht, wenn die Fördereinrichtung so eingerichtet ist, dass die zu identifizierenden Gegenstände in zwei Richtungen bewegbar sind (Anspruch 7). In diesem Fall kann der Behälter in den Tunnel zurückbefördert werden, damit die noch nicht aufgefundenen Transponder auch noch identifiziert werden können (Anspruch 8). Dabei kann vorbestimmt oder in Abhängigkeit vom Ergebnis der Verbesserung der Behälter bis in den Lesebereich der dritten, der zweiten oder gar der ersten Antenne zurückbefördert werden. Selbstverständlich kann die zu erwartende Zahl der Transponder auf andere Weise ermittelt werden, z.B. durch ein Wiegen des Behälters und damit zur Bestimmung der Anzahl zu erwartenden Gegenstände im Behälter, wenn das Behältergewicht und das Gewicht der einzelnen Gegenstände, die einen Transponder aufweisen, bekannt ist und die Gegenstände gleiches Gewicht haben.

Wenn bei bestimmten Behälterladungen nicht ausgeschlossen werden kann, dass zwei oder mehr Transponder sich so nahe beieinander befinden, dass sie nicht identifiziert werden können, kann es vorteilhaft sein, wenn die Fördereinrichtung so eingerichtet ist, dass durch ein nichtlineares Bewegungsprofil - vorzugsweise durch eine Rüttelbewegung - z.B. quer zur Förderrichtung die Anordnung der Transponder während des Lesevorganges veränderbar ist, um so die Anzahl von identifizierbaren Transpondern beim Durchlauf auf dem Transportband zu erhöhen (Anspruch 9).

Die Aufgabe der Erfindung wird verfahrenstechnisch durch ein Verfahren zum Identifizieren von Gegenständen nach Anspruch 10 gelöst, wobei hier die Massnahmen der Erfindung eine entsprechend hohe Wahrscheinlichkeit gewährleisten, dass eine hohe Zahl von Transpondern im Tunnel identifiziert werden kann, für kleinere Behälter vorzugsweise mit dem Verfahren nach Anspruch 11, für grössere nach Anspruch 12. Die Identifizierungsleistung kann wiederum dadurch erhöht werden, dass die Sende- und Empfangseinrichtung beim Identifizieren jedes Transponders diesem Transponder den Befehl gibt, in einen Modus zu schalten, bei dem der Transponder während des Empfangs von Signalen oder während des Empfangs von Signalen und noch eine vorbestimmte Zeit danach keine Antwort gibt (Anspruch 13). Weiterhin kann die Identifizierungsleistung dadurch erhöht werden, dass die Fördereinrichtung die Förderrichtung wechselt und die Gegenstände in den Lesebereich von einer, zwei oder drei Antennen zurück befördert, wenn eine vorgegebene Anzahl zu identifizierender Transponder um ein Defizit in vorbestimmter Höhe nach dem Ende des ldentifizierungsvorganges nicht erreicht ist (Anspruch 14). Zusätzlich oder alternativ kann es vorteilhaft sein, wenn die Fördereinrichtung durch ein nichtlineares Bewegungsprofil in einer anderen Richtung als die Förderrichtung die Anordnung der Transponder während des Lesevorganges verändert (Anspruch 15).

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft eine erfindungsgemässe Identifikationsvorrichtung und ein Identifikationsverfahren für Gegenstände mit einem Transponder erläutert werden. In den Zeichnungen zeigt:
- Figur 1: eine Identifikationsvorrichtung gemäss einem bevorzugten Ausführungsbeispiel der vorliegenden Erfindung in perspektivischer Darstellung, bei der die Antennen unter einer Abschirmung angeordnet sind,
- Figur 2: die Identifikationsvorrichtung nach Figur 1 ohne die Abschirmung, so dass die Antennen und deren Abstimmeinrichtungen sichtbar sind;
- Figur 3: den Tunnel der Identifikationsvorrichtung nach Figur 1 in schematischer Darstellung; und
- Figur 4: eine schematische Darstellung der Schaltungslogik zum Ansteuern der Antennen gemäss Figur 1.

### Wege zur Ausführung der Erfindung

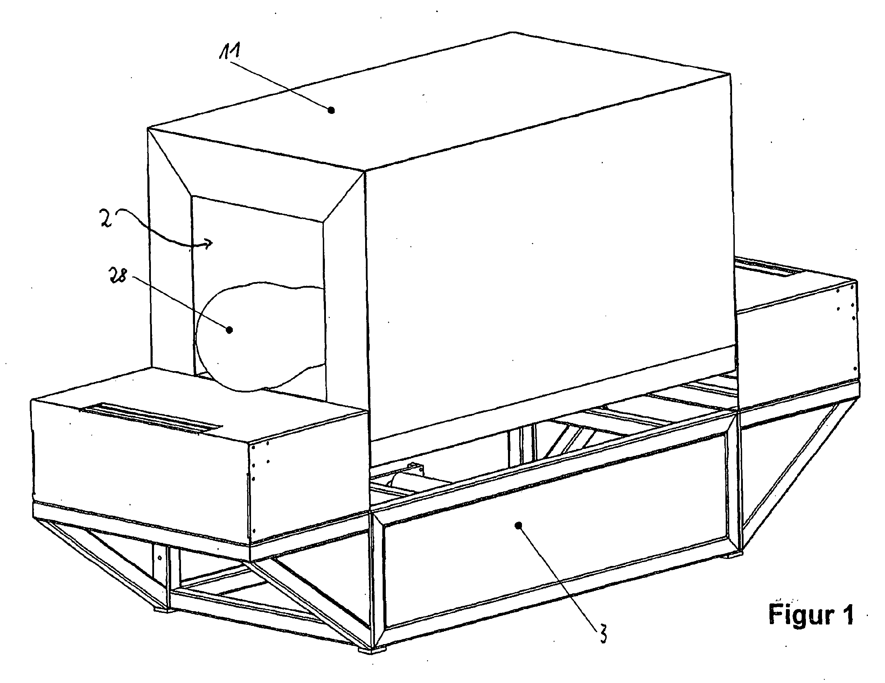

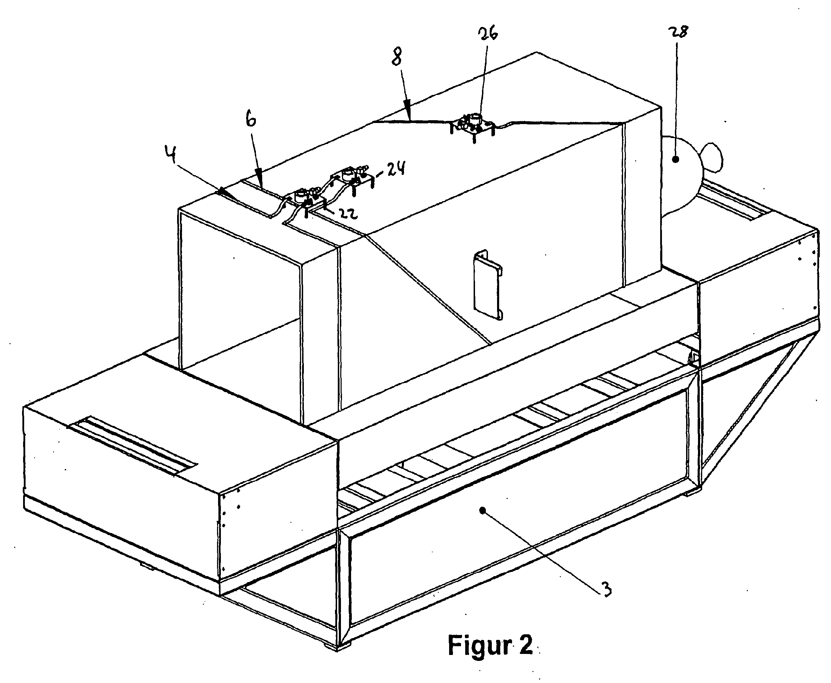

Der in Figur 1 bis 3 mit 2 bezeichnete Tunnel weist im Ausführungsbeispiel drei Antennen 4, 6 und 8 auf, die als Spulen um den Tunnel herumgeführt sind. Auf der Bodenfläche des Tunnels 2 ist die Fördereinrichtung 3, nämlich ein Transportband für die die Gegenstände mit Transpondern enthaltenen Transportbehälter angeordnet. In Figur 2 ist die Identifikationsvorrichtung ohne die in Figur 1 angebrachte Abschirmung 11 dargestellt, so dass die Abstimmeinrichtungen 22, 24 und 26 sichtbar sind.

Die Normale der Ebene der ersten Antenne 4 ist parallel zur Förderrichtung x des Transportbandes angeordnet und diese Richtung ist in Figur 1 als x' bezeichnet. Im vorliegenden Ausführungsbeispiel fällt die erste Antenne 2 mit dem Tunneleingang zusammen. Die zweite Antenne 6 ist um einen Winkel von ca. 45° gegenüber der ersten Antenne 4 (vertikal) gekippt. Das Lot ihrer Ebene ist in Figur 1 mit y' bezeichnet. Wesentlich ist im vorliegenden Ausführungsbeispiel, dass der Mittelpunkt der zweiten Antenne 6 in etwa in der Mitte des Tunnels in deutlichem Abstand von der ersten Antenne liegt und sich die beiden Antennen 4 und 6 weder berühren noch überlappen, sondern einen Abstand von ca. 1/3 der Tunnellänge aufweisen. Die dritte Antenne 8 ist um einen Winkel von ca. 45° gegenüber der ersten Antenne 4 (seitlich) verdreht. Das Lot ihrer Ebene ist in Figur 1 mit z' bezeichnet. Wesentlich ist im vorliegenden Ausführungsbeispiel wiederum, dass eine seitliche Kante der dritten Antenne 6 in etwa am Tunnelende liegt, während die andere seitliche Kante in deutlichem Abstand von der zweiten Antenne 6 angeordnet ist und sich die beiden Antennen 6 und 8 auch nicht berühren oder überlappen, sondern ihre Mittelpunkte wiederum einen Abstand von ca. 1/3 der Tunnellänge aufweisen.

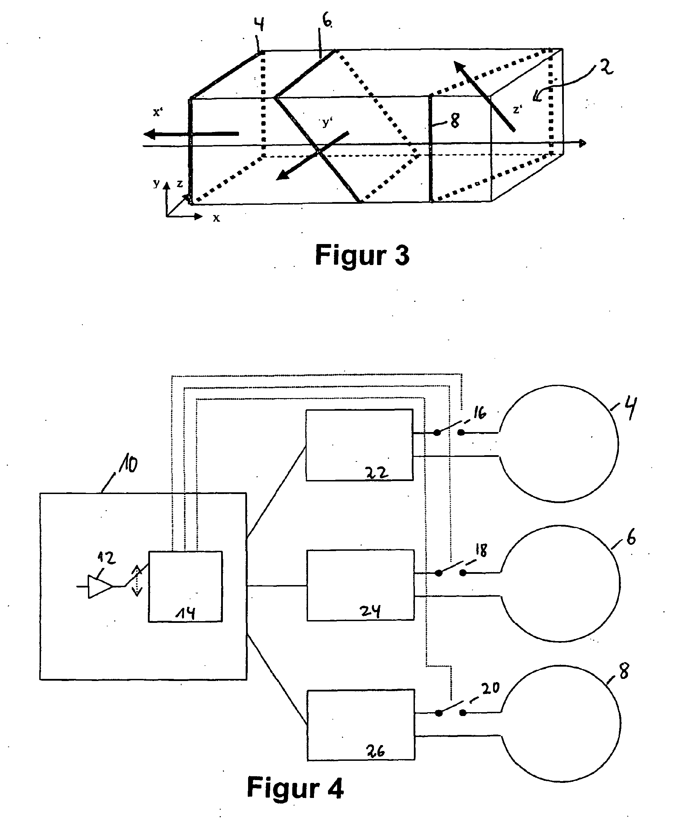

Die Antennen 4, 6 und 8 werden im vorliegenden Ausführungsbeispiel mit einer Schaltungseinrichtung 10 mit Leseeinrichtung angesteuert und ausgelesen, die in Figur 3 schematisch dargestellt ist. Die Schaltungseinrichtung weist einen Zeittaster (Multiplexer) 14 auf, der die elektrischen Signale des Antennenverstärkers 12 wahlweise jeweils mitttels der Schalter 16, 18, bzw. 20 und jeweils einer der Antennen zugeordneten Abgleicheinrichtung 22, 24 bzw. 26 auf eine der Antennen 4, 6, bzw. 8 verteilt und die eingehenden Signale jeweils einer dieser Antennen ausliest. Die weitere Elektronik ist herkömmlich und in der Beschreibung des vorliegenden Ausführungsbeispiels nicht näher dargestellt.

Die Zeittasteinrichtung 14 der Schaltungselektronik 10 ist so angesteuert - im vorliegenden Ausführungsbeispiel mit einem Computer -, dass eines der beiden nachstehend beschriebenen Verfahren zur Anwendung kommt:

Für kleinere Behälter 28 für Prüfkörper, die nicht grösser sind als der Abstand der ersten Antennenebene x' zur dritten Antennenebene z', bei denen es also nicht wahrscheinlich ist, dass Transponder mit der dritten Antenne 8 schon identifiziert werden, wenn noch andere Transponder mit der ersten Antenne 4 identifiziert werden, ist die Ansteuerung so eingerichtet ist, dass sie zunächst die erste Antenne 4 aktiviert. Beim Identifizieren von Transpondern durch die erste Antenne 4 werden möglichst viele Transponder identifiziert und gleichzeitig wird alternierend im Zeittastverfahren die zweite Antenne 6 aktiviert. Nunmehr identifizieren beide aktivierten Antennen Transponder, bis die erste Antenne 4 keine Transponder mehr identifiziert und abgeschaltet wird. Gleichzeitig wird im Zeittastverfahren die dritte Antenne 8 aktiviert. Durch die zweite und die dritte Antenne 6 und 8 werden möglichst viele Transponder identifiziert, bis die zweite Antenne 6 keine Transponder mehr identifiziert. Dann wird die dritte Antenne 8 in Betrieb gehalten, bis sie keine Transponder mehr identifiziert. Anschliessend nimmt die Auswerteeinrichtung 10 die Auswertung und eine Ausgabe und/oder eine Speicherung der Ergebnisse vor.

Für grössere Behälter 28, die grösser sind als der Abstand der ersten Antennenebene x' zur dritten Antennenebene z', bei denen es also wahrscheinlich ist, dass Transponder mit der dritten Antenne 8 schon identifiziert werden, wenn noch andere Transponder mit der ersten Antenne 4 identifiziert werden, ist die Ansteuerung so eingerichtet, dass sie auch zunächst die erste Antenne 4 aktiviert. Beim Identifizieren von Transpondern werden durch die erste Antenne 4 möglichst viele Transponder identifiziert, und sobald die ersten Transponder identifiziert werden, wird alternierend im Zeittastverfahren die zweite Antenne 6 aktiviert. Auch diese identifiziert möglichst viele Transponder, aber schon beim Identifizieren von Transpondern mit der zweiten Antenne 6 wird die dritte Antenne 8 aktiviert. Die erste Antenne 4 wird abschaltet, wenn diese für eine bestimmte Zeit keine Transponder mehr identifiziert. Auch die zweite Antenne 6 wird abschaltet, wenn sie für eine bestimmte Zeit keine Transponder mehr identifiziert. Die dritte Antenne 8 wird wiederum in Betrieb gehalten, bis diese für eine bestimmte Zeit keine Transponder mehr identifiziert. Dann nimmt die Auswerteeinrichtung 10 wie zuvor die Auswertung und eine Ausgabe und/oder eine Speicherung der Ergebnisse vor.

Im Allgemeinen wird eine ldentifikationsvorrichtung gemäss dem vorliegenden Ausführungsbeispiel der Erfindung immer mit einer bestimmten Behälterart beschickt werden, so dass eine der beiden vorstehend beschriebenen Betriebsarten fest in der Identifikationsvorrichtung eingerichtet werden kann. Es ist - gemäss dem vorliegenden Ausführungsbeispiel - aber auch möglich, eine der beiden Betriebsarten über den Computer oder eine andere Eingabeeinrichtung anzuwählen.

Die Sende- und Empfangseinrichtung 10 ist im vorliegenden Ausführungsbeispiel so eingerichtet, dass sie beim Identifizieren jedes Transponders diesem Transponder den Befehl gibt, in einen Modus zu schalten, bei dem der Transponder während des Empfangs von Signalen und - sofern der Transponder dafür vorgesehen ist und einen entsprechenden Energiespeicher zum Speichern seines Zustandes aufweist - für die Zeit danach keine Antwort gibt, die der Transportzeit von der jeweiligen Antenne bis zum Tunnelende entspricht.

In einer zweiten, alternativen Ausführung der vorliegenden Erfindung kann die Fördereinrichtung den Behälter 28 im Tunnel 2 in beide Richtungen bewegen. Wenn nämlich die Zahl der Gegenstände im Behälter 28, der durch den Tunnel 2 befördert wird, genau oder in etwa bekannt ist, dann kann nach dem Durchlaufen festgestellt werden, ob alle oder wenigstens nahezu alle Transponder im Behälter identifiziert werden konnten. Wenn nach dem Durchlauf eines solchen Behälters durch den Tunnel 2 die Zahl der identifizierten Transponder der Zahl der Gegenstände im Behälter 28 nicht entspricht, die einen Transponder aufweisen sollten, so wird in diesem Ausführungsbeispiel die Förderrichtung der Fördereinrichtung nach dem Durchlaufen des Behälters 28 gewechselt und der Behälter 28 so in den Lesebereich der dritten, der dritten und der zweiten oder aller drei Antennen 8, 6, 4 zurückbefördert. Dazu ist die Fördereinrichtung so eingerichtet, dass die zu identifizierenden Gegenstände in zwei Richtungen bewegbar sind. Im vorliegenden Ausführungsbeispiel wird dabei an Hand des ermittelten Defizits bestimmt, ob der Behälter 28 bis in den Lesebereich der dritten, der zweiten oder gar der ersten Antenne 8, 6, bzw. 4 zurückbefördert wird. Alternativ kann die zu erwartende Zahl der Transponder auch auf andere Weise ermittelt werden, z.B. durch ein Wiegen des Behälters 28 auf dem Förderband durch eine entsprechende Wiegeeinrichtung und damit zur Bestimmung der zu erwartenden Gegenstände im Behälter 28, wenn das Behältergewicht und das Gewicht der einzelnen Gegenstände, die einen Transponder aufweisen, bekannt ist und die Gegenstände gleiches Gewicht haben.

In einem weiteren Ausführungsbeispiel, welches mit dem ersten oder dem zweiten Ausführungsbeispiel kombiniert werden kann, ist die Fördereinrichtung so eingerichtet, dass durch ein nichtlineares Bewegungsprofil - im Ausführungsbeispiel durch eine Rüttelbewegung - quer zur Förderrichtung die Anordnung der Transponder während des Lesevorganges veränderbar ist. Wenn bei bestimmten Behälterladungen nicht ausgeschlossen werden kann, dass zwei oder mehr Transponder sich so nahe beieinander befinden, dass sie nicht identifiziert werden können, kann dieses Rüttelprofil eingesetzt werden, damit die Anordnung der Transponder während des Lesevorganges veränderbar ist, um so die Anzahl von identifizierbaren Transpondern beim Durchlauf auf dem Transportband zu erhöhen.

### Bezugszeichenliste

- 2: Identifikationstunnel
- 3: Fördereinrichtung
- 4: erste Antenne
- 6: zweite Antenne
- 8: dritte Antenne
- 10: Schaltungseinrichtung mit Leseeinrichtung
- 11: Abschirmung
- 12: Antennenverstärker
- 14: Zeittasteinrichtung (Multiplexer)
- 16: Schalter für die erste Antenne
- 18: Schalter für die erste Antenne
- 20: Schalter für die dritte Antenne
- 22: Antennenabgleicheinrichtung für die erste Antenne
- 24: Antennenabgleicheinrichtung für die zweite Antenne
- 26: Antennenabgleicheinrichtung für die dritte Antenne
- 28: Behälter für Prüfkörper

- x: Transportrichtung des Behälters
- x': Normale der Ebene der ersten Antenne
- y': Normale der Ebene der zweiten Antenne
- z': Normale der Ebene der dritten Antenne

## Patentansprüche

1. Identifikationsvorrichtung für Gegenstände, die jeweils einen Transponder aufweisen, mit einer Fördervorrichtung für die zu identifizierenden Gegenstände, wobei die Fördereinrichtung einen Tunnel (2) aufweist, durch die die zu identifizierenden Gegenstände hindurch transportierbar sind, einer Sende- und Empfangseinrichtung (10) für die Kommunikation mit den Transpondern der zu identifizierenden Gegenstände, wobei die Sende- und Empfangseinrichtung (10) eine Auswerteeinrichtung und eine Antenneneinrichtung aufweist, wobei die Antenneneinrichtung zumindest drei hintereinander angeordnete, spulenförmige Antennen (4, 6, 8) aufweist, wobei die Antennenspulen den Tunnel (2) umschliessen, wobei zumindest drei den Tunnel (2) umgebenden Antennen (4, 6, 8) jeweils in einer unterschiedlichen Ebene (x', y', z') liegen, und wobei die Ebenen (x', y', z') ein linear unabhängiges System darstellen, **dadurch gekennzeichnet, dass** sich die Antennenebenen (x', y', z') innerhalb des Tunnels (2) nicht überschneiden oder berühren und dass die Sende- und Empfangseinrichtung (10) eine Zeittasteinrichtung (14) aufweist, die so eingerichtet ist, dass die Antennen (4, 6, 8) im Zeittastverfahren bedienbar sind.

2. Identifikationsvorrichtung nach Anspruch 1, **dadurch gekennzeichnet, dass** die Antennenebenen (x', y', z') innerhalb des Tunnels (2) einen Abstand von zumindest 150 mm aufweisen.

3. Identifikationsvorrichtung nach einem der Ansprüche 1 oder 2, **dadurch gekennzeichnet, dass** eine der Ebenen (x') senkrecht auf der Normalen-Richtung desr Förderbandes steht.

4. Identifikationsvorrichtung nach Anspruch 3, **dadurch gekennzeichnet, dass** die Sende- und Empfangseinrichtung (10) so eingerichtet ist, dass sie zunächst die erste Antenne (4) aktiviert, beim Identifizieren von Transpondern durch die erste Antenne (4) möglichst viele Transponder identifiziert und nach dem ersten Identifizieren von Transpondern mit der ersten Antenne alternierend im Zeittastverfahren die zweite Antenne (6) aktiviert, und durch diese beiden Antennen möglichst viele Transponder identifiziert, bis die erste Antenne (4) keine Transponder mehr identifiziert, dann alternierend im Zeittastverfahren die dritte Antenne (8) aktiviert und durch die zweite und die dritte Antenne (6, 8) möglichst viele Transponder identifiziert, bis die zweite Antenne (6) keine Transponder mehr identifiziert, dann die dritte Antenne (8) in Betrieb hält, bis diese keine Transponder mehr identifiziert, und dass dann die Auswerteeinrichtung (10) die Auswertung und eine Ausgabe und/oder eine Speicherung der Ergebnisse vornimmt.

5. Identifikationsvorrichtung nach Anspruch 3, **dadurch gekennzeichnet, dass** die Sende- und Empfangseinrichtung (10) so eingerichtet ist, dass sie zunächst die erste Antenne (4) aktiviert, beim Identifizieren von Transpondern durch die erste Antenne (4) möglichst viele Transponder identifiziert, und nach dem ersten Identifizieren von Transpondern mit der ersten Antenne alternierend im Zeittastverfahren die zweite Antenne (6) aktiviert und durch diese beiden Antennen möglichst viele Transponder identifiziert, schon beim Identifizieren von Transpondern mit der zweiten Antenne (6) die dritte Antenne (8) aktiviert, die erste Antenne (4) abschaltet, wenn diese für eine bestimmte Zeit keine Transponder mehr identifiziert, die zweite Antenne (6) abschaltet, wenn diese für eine bestimmte Zeit keine Transponder mehr identifiziert, und die dritte Antenne (8) in Betrieb gehalten wird, bis diese für eine bestimmte Zeit keine Transponder mehr identifiziert, und dass dann die Auswerteeinrichtung die Auswertung und eine Ausgabe und/oder eine Speicherung der Ergebnisse vornimmt.

6. Identifikationsvorrichtung nach einem der Ansprüche 1 bis 5, **dadurch gekennzeichnet, dass** die Sende- und Empfangseinrichtung (10) so eingerichtet ist, dass sie beim Identifizieren jedes Transponders diesem Transponder den Befehl gibt, in einen Modus zu schalten, bei dem der Transponder während des Empfangs von Signalen oder während des Empfangs von Signalen und noch eine vorbestimmte Zeit danach keine Antwort gibt.

7. Identifikationsvorrichtung nach einem der Ansprüche 1 bis 6, **dadurch gekennzeichnet, dass** die Fördereinrichtung so eingerichtet ist, dass die zu identifizierenden Gegenstände in zwei Richtungen bewegbar sind.

8. Identifikationsvorrichtung nach Anspruch 7, **dadurch gekennzeichnet, dass** sie so eingerichtet ist, dass eine bestimmte Anzahl von zu identifizierenden Transpondern vorgebbar ist und beim Vorliegen eines Defizits in vorbestimmter Höhe nach dem Ende des Identifizierungsvorganges die die Förderrichtung der Fördereinrichtung gewechselt wird in den Lesebereich von einer, zwei oder drei Antennen (8; 6; 4), um so zu ermöglichen dass weitere, bisher nicht identifizierte Transponder identifizierbar sind.

9. Identifikationsvorrichtung nach einem der Ansprüche 1 bis 8, **dadurch gekennzeichnet, dass** die Fördereinrichtung so eingerichtet ist, dass durch ein nichtlineares Bewegungsprofil in einer anderen Richtung als die Förderrichtung die Anordnung der Transponder während des Lesevorganges veränderbar ist, um so die Anzahl von identifizierbaren Transpondern beim Durchlauf auf dem Transportband zu erhöhen.

10. Verfahren zum Identifizieren von Gegenständen, die jeweils einen Transponder aufweisen, mit einer Identifikationsvorrichtung, die eine Fördervorrichtung für die zu identifizierenden Gegenstände aufweist, wobei die Fördereinrichtung einen Tunnel (2) aufweist, durch die die zu identifizierenden Gegenstände hindurch transportierbar sind, wobei die Identifikationsvorrichtung weiterhin eine Sende- und Empfangseinrichtung (10) für die Kommunikation mit den Transpondern der zu identifizierenden Gegenstände aufweist, wobei die Sende- und Empfangseinrichtung (10) eine Antenneneinrichtung und eine Auswerteeinrichtung aufweist, wobei die Antenneneinrichtung zumindest drei hintereinander angeordneter, spulenförmige Antennen (4, 6, 8) aufweist, wobei die Antennenspulen den Tunnel (2) umschliessen, insbesondere mit einer Identifikationseinrichtung nach einem der Ansprüche 1 bis 9, **dadurch gekennzeichnet, dass** die Antennen im Zeittastverfahren bedient werden.

11. Verfahren zum Identifizieren von Gegenständen nach Anspruch 10, **dadurch gekennzeichnet, dass** die Sende- und Empfangseinrichtung (10) zunächst die erste Antenne (4) aktiviert, beim Identifizieren von Transpondern durch die erste Antenne (4) möglichst viele Transponder identifiziert, dann alternierend im Zeittastverfahren die zweite Antenne (6) aktiviert und auch durch diese möglichst viele Transponder identifiziert, bis die erste Antenne (4) keine Transponder mehr identifiziert, dann alternierend im Zeittastverfahren die dritte Antenne (8) aktiviert und durch die die zweite und die dritte Antenne (6, 8) möglichst viele Transponder identifiziert, bis die zweite (6) Antenne keine Transponder mehr identifiziert, dann die dritte Antenne (8) in Betrieb hält, bis sie keine Transponder mehr identifiziert und dass dann die Auswerteeinrichtung die Auswertung und eine Ausgabe und/oder eine Speicherung der Ergebnisse vornimmt.

12. Verfahren zum Identifizieren von Gegenständen nach Anspruch 10, **dadurch gekennzeichnet, dass** die Sende- und Empfangseinrichtung (10) zunächst die erste Antenne (4) aktiviert, beim Identifizieren von Transpondern durch die erste Antenne (4) möglichst viele Transponder identifiziert, dann alternierend im Zeittastverfahren die zweite Antenne (6) aktiviert und auch durch diese möglichst viele Transponder identifiziert, beim Identifizieren von Transpondern mit der zweiten Antenne (6) die dritte Antenne (8) aktiviert, die erste Antenne (4) abschaltet, wenn diese für eine bestimmte Zeit keine Transponder mehr identifiziert, die zweite Antenne (6) abschaltet, wenn diese für eine bestimmte Zeit keine Transponder mehr identifiziert, und die dritte Antenne (8) in Betrieb hält, bis diese für eine bestimmte Zeit keine Transponder mehr identifiziert, und dass dann die Auswerteeinrichtung die Auswertung und eine Ausgabe und/oder eine Speicherung der Ergebnisse vornimmt.

13. Verfahren zum Identifizieren von Gegenständen nach einem der Ansprüche 10 bis 12, **dadurch gekennzeichnet, dass** die Sende- und Empfangseinrichtung (10) beim Identifizieren jedes Transponders diesem Transponder den Befehl gibt, in einen Modus zu schalten, bei dem der Transponder während des Empfangs von Signalen oder während des Empfangs von Signalen und noch eine vorbestimmte Zeit danach keine Antwort gibt.

14. Verfahren zum Identifizieren von Gegenständen nach einem der Ansprüche 10 bis 13, **dadurch gekennzeichnet, dass** die Fördereinrichtung die Förderrichtung wechselt und die Gegenstände in den Lesebereich von einer, zwei oder drei Antennen (8, 6, 4) zurück befördert, wenn eine vorgegebene Anzahl zu identifizierender Transponder um ein Defizit in vorbestimmter Höhe nach dem Ende des Identifizierungsvorganges nicht erreicht ist.

15. Verfahren zum Identifizieren von Gegenständen nach einem der Ansprüche 10 bis 14, **dadurch gekennzeichnet, dass** die Fördereinrichtung durch ein nichtlineares Bewegungsprofil in einer anderen Richtung als die Förderrichtung die Anordnung der Transponder während des Lesevorganges verändert.

## Claims

1. An identification device for objects, each of which comprises a transponder, with a conveyor device for the objects to be identified, the conveyor device comprising a tunnel (2) through which the objects to be identified are transportable, a transmitting and receiving device (10) for communication with the transponders of the objects to be identified, the transmitting and receiving device (10) comprising a processing device and an antenna device, the antenna device comprising at least three sequentially arranged coil-shaped antennas (4, 6, 8) that surround the tunnel (2), at least three of the antennas (4, 6, 8) that surround the tunnel (2) lying each in a different plane (x', y', z'), the planes (x', y', z') representing a linearly independent system, **characterized in that** the antenna planes (x', y', z') do not intersect or contact each other within the tunnel (2), and that the transmitting and receiving device (10) comprises a multiplexer (14) that is set up in such a way that the antennas (4, 6, 8) are operable in the multiplexer mode.

2. The identification device according to claim 1, **characterized in that** the antenna planes (x', y', z') have a displacement of at least 150 mm within the tunnel (2).

3. The identification device according to claim 1 or 2, **characterized in that** one of the planes (x') is perpendicular to the normal of the conveyor band.

4. The identification device according to claim 3, **characterized in that** the transmitting and receiving device (10) is set up in such a way that initially it activates the first antenna (4), whereupon during identification of transponders with the first antenna (4) it identifies as many transponders as possible, and that following the first identification of transponders with the first antenna it alternatingly activates the second antenna (6) in a multiplexer mode and identifies as many transponders as possible with these two antennas until the first antenna (4) no longer identifies any transponders, whereupon it alternatingly activates the third antenna (8) in a multiplexer mode and identifies as many transponders as possible by the second and the third antenna (6, 8) until the second antenna (6) no longer identifies any transponders, whereupon it keeps the third antenna (8) in operation until it no longer identifies any transponders, and that subsequently the processing device (10) performs the processing and an output and/or storage of the results.

5. The identification device according to claim 3, **characterized in that** the transmitting and receiving device (10) is set up in such a way that initially it activates the first antenna (4), whereupon during identification of transponders with the first antenna (4) it identifies as many transponders as possible, and that following the first identification of transponders with the first antenna it alternatingly activates the second antenna (6) in a multiplexer mode and it identifies as many transponders as possible with these two antennas, whereupon already during identification of transponders with the second antenna (6) it activates the third antenna (8), it deactivates the first antenna (4), when the latter no longer identifies any transponders for a specific time, it deactivates the second antenna (6), when the latter no longer identifies any transponders for a specific time, and it keeps in use the third antenna (8), until the latter no longer identifies any transponders for a specific time, and that subsequently the processing device performs the processing and an output and/or storage of the results.

6. The identification device according to any one of claims 1 to 5, **characterized in that** the transmitting and receiving device (10) is set up in such a way that upon identification of each transponder it commands said transponder to switch into a mode in which the transponder does not respond during the reception of signals and for a time thereafter.

7. The identification device according to any one of claims 1 to 6, **characterized in that** the conveyor device is set up in such a way that the objects to be identified are movable in two directions.

8. The identification device according to claim 7, **characterized in that** it is set up in such a way that a specific number of transponders to be identified can be predefined, and that in the presence of a deficit of predetermined amount after the completion of the identification process the conveyor direction of the conveyor device is switched into the reading range of one, two or three antennas (8; 6; 4), so as to allow identification of further transponders not identified as yet.

9. The identification device according to any one of claims 1 to 8, **characterized in that** the conveyor device is set up in such a way that the arrangement of the transponders can be changed during the reading process by means of a non-linear movement profile in another direction than the conveyor direction, so as to increase the number of identifiable transponders upon passing onto the conveyor band.

10. A method for identifying objects, each of which comprises a transponder, by means of an identification device that comprises a conveyor device for the objects to be identified, the conveyor device comprising a tunnel (2), through which the objects to be identified are transportable, the identification device further comprising a transmitting and receiving device (10) for communication with the transponders of the objects to be identified, the transmitting and receiving device (10) comprising an antenna device and an processing device, the antenna device comprising at least three sequentially arranged coil-shaped antennas (4, 6, 8), the antenna coils surrounding the tunnel (2), particularly by means of an identification device according to any one of claims 1 to 10, **characterized in** operating the antennas in the multiplexer mode.

11. The method for identifying objects according to claim 10, **characterized in that** the transmitting and receiving device (10) initially activates the first antenna (4), whereupon during identification of transponders with the first antenna (4) it identifies as many transponders as possible, then it alternatingly activates the second antenna (6) in a multiplexer mode and identifies also as many transponders as possible with this antenna until the first antenna (4) no longer identifies any transponders, whereupon it alternatingly activates the third antenna (8) in a multiplexer mode and identifies as many transponders as possible with the second and the third antenna (6, 8) until the second antenna (6) no longer identifies any transponders, whereupon it keeps the third antenna (8) in operation until it no longer identifies any transponders, and that subsequently the processing device performs the processing and an output and/or storage of the results.

12. The method for identifying objects according to claim 10, **characterized in that** the transmitting and receiving device (10) initially activates the first antenna (4), whereupon during identification of transponders with the first antenna (4) it identifies as many transponders as possible, then it alternatingly activates the second antenna (6) in a multiplexer mode and identifies also as many transponders as possible with this antenna, activates the third antenna (8) during identification of transponders with the second antenna (6), deactivates the first antenna (4) when the latter no longer identifies any transponders for a specific time, deactivates the second antenna (6) when the latter no longer identifies any transponders for a specific time, and keeps in use the third antenna (8) until the latter no longer identifies any transponders for a specific time, the processing device subsequently performing the processing and an output and/or storage of the results.

13. The method for identifying objects according to any one of claims 10 to 12, **characterized in that** the transmitting and receiving device (10) upon identification of each transponder commands said transponder to switch into a mode in which the transponder does not respond during reception of signals and for a time thereafter.

14. The method for identifying objects according to any one of claims 10 to 13, **characterized in that** the conveyor device switches conveyor direction and conveys the objects back into the reading range of one, two or three antennas (8, 6, 4) when a predefined number of transponders to be identified is missed by a deficit of predetermined amount after completion of the identification process.

15. The method for identifying objects according to any one of claims 10 to 14, **characterized in that** the conveyor device changes the arrangement of the transponders during the reading process by means of a non-linear moving profile in another direction than the conveyor direction.

## Revendications

1. Dispositif d'identification d'objets comportant chacun un transpondeur et une installation de transfert pour les objets à identifier,
l'installation de transfert comportant un tunnel (2) à travers lequel sont transportés des objets à identifier,
une installation d'émission et de réception (10) pour communiquer avec les transpondeurs des objets à identifier,
l'installation d'émission et de réception (10) comporte une installation d'exploitation et une installation d'antennes,
l'installation d'antennes comportant au moins trois antennes en forme de bobines (4, 6, 8) situées l'une derrière l'autre,
les bobines formant les antennes entourant le tunnel (2),
au moins trois antennes (4, 6, 8) entourant le tunnel (2) étant situées respectivement dans des plans différents (x', y', z'), et
les plans (x', y', z') constituent un système linéaire indépendant,
**caractérisé en ce que**
les plans d'antennes (x', y', z') ne se coupent ni se touchent dans le tunnel (2), et
l'installation d'émission et de réception (10) comporte une installation de détection de temps (14) conçue pour mettre en oeuvre les antennes (4, 6, 8) selon un procédé de détection de temps.

2. Dispositif d'identification selon la revendication 1,
**caractérisé en ce que**
les plans d'antennes (x', y', z') dans le tunnel (2) sont écartés d'une distance d'au moins 150 mm.

3. Dispositif d'identification selon la revendication 1 ou 2,
**caractérisé en ce que**
l'un des plans (x') est perpendiculaire à la direction de la normale à la bande transporteuse.

4. Dispositif d'identification selon la revendication 3,
**caractérisé en ce que**
l'installation d'émission et de réception (10) est conçue pour activer tout d'abord la première antenne (4), et pour l'identification de transpondeurs par la première antenne (4) on identifie un nombre aussi important que possible de transpondeurs et après la première identification de transpondeurs avec la première antenne, on active en alternance selon un procédé de détection dans le temps, la seconde antenne (6), et ces deux antennes identifient un nombre aussi grand que possible de transpondeurs jusqu'à ce que la première antenne (4) n'identifie plus aucun transpondeur puis, en alternance, selon le procédé de détection dans le temps, on active la troisième antenne (8) et avec la seconde et la troisième antenne (6, 8) on identifie un nombre aussi élevé que possible de transpondeurs jusqu'à ce que la seconde antenne (6) n'identifie plus aucun transpondeur puis on maintient en fonctionnement la troisième antenne (8) jusqu'à ce que celle-ci n'identifie plus aucun transpondeur, et
ensuite l'installation d'exploitation (10) assure l'exploitation des résultats et leur émission et/ou leur enregistrement en mémoire.

5. Dispositif d'identification selon la revendication 3,
**caractérisé en ce que**
l'installation d'émission et de réception (10) est conçue pour qu'elle active tout d'abord la première antenne (4) et qu'en identifiant les transpondeurs, la première antenne (4) identifie un nombre aussi grand que possible de transpondeurs et après la première identification de transpondeurs avec la première antenne, on active en alternance selon un procédé de détection dans le temps, la seconde antenne (6) et avec ces deux antennes, on identifie un nombre aussi grand que possible de transpondeurs et déjà lors de l'identification des transpondeurs avec la seconde antenne (6), on active la troisième antenne (8) et on coupe la première antenne (4) lorsque celle-ci n'a plus identifié aucun transpondeur pendant une durée déterminée, on coupe la seconde antenne (6) lorsque celle-ci n'a plus identifié aucun transpondeur pendant une durée prédéterminée et on maintient le fonctionnement de la troisième antenne (8) jusqu'à ce que celle-ci n'ait plus identifié aucun transpondeur pendant une durée déterminée, et
ensuite l'installation d'exploitation assure l'exploitation des résultats et leur émission et/ou leur enregistrement en mémoire.

6. Dispositif d'identification selon les revendications 1 à 5,
**caractérisé en ce que**
l'installation d'émission et de réception (10) est conçue pour qu'à l'identification de chaque transpondeur, elle envoie un ordre à ce transpondeur pour le commuter dans un mode selon lequel le transpondeur n'envoie pas de réponse pendant la réception de signaux ou encore pendant la réception de signaux et pendant une durée prédéfinie.

7. Dispositif d'identification selon les revendications 1 à 6,
**caractérisé en ce que**
l'installation de transfert est conçue pour que les objets à identifier soient mobiles dans deux directions.

8. Dispositif d'identification selon la revendication 7,
**caractérisé en ce que**
l'installation de transfert est conçue pour prédéfinir un nombre déterminé de transpondeurs à identifier, et qu'en cas de déficit d'une amplitude prédéfinie à la fin de l'opération d'identification, on change le sens de transfert de l'installation de transfert dans la zone de lecture d'une, de deux ou de trois antennes (8 ; 6 ; 4) pour permettre ainsi d'identifier d'autres transpondeurs qui n'ont pas été identifiés jusqu'alors.

9. Dispositif d'identification selon les revendications 1 à 8,
**caractérisé en ce que**
l'installation de transfert est conçue pour qu'avec un profil de mouvement non linéaire dans une autre direction que la direction de transfert, la disposition des transpondeurs soit modifiée au cours de l'opération de lecture pour augmenter le nombre de transpondeurs à identifier au passage sur la bande transporteuse.

10. Procédé d'identification d'objets équipé chacun d'un transpondeur à l'aide d'un dispositif d'identification comportant une installation de transfert des objets à identifier, l'installation de transfert ayant un tunnel (2) à travers lequel on transporte les objets à identifier
le dispositif d'identification ayant en outre une installation d'émission et
de réception (10) pour la communication avec les transpondeurs des objets à identifier,
l'installation d'émission et de réception (10) ayant une installation d'antennes et une installation d'exploitation,
l'installation d'antennes ayant au moins trois antennes en forme de bobines (4, 6, 8) disposées l'une derrière l'autre,
les bobines d'antennes entourant le tunnel (2) notamment avec une installation d'identification selon les revendications 1 à 9,
**caractérisé en ce que**
les antennes sont actionnées selon un procédé de détection dans le temps.

11. Procédé d'identification d'objets selon la revendication 10,
**caractérisé en ce que**
l'installation d'émission et de réception (10) active tout d'abord la première antenne (4) et pour l'identification de transpondeurs par la première antenne (4), elle identifie un nombre aussi grand que possible de transpondeurs, puis en alternance dans le procédé de détection dans le temps, on active la seconde antenne (6) et avec celle-ci on identifie un nombre aussi grand que possible de transpondeurs jusqu'à ce que la première antenne (4) n'identifie plus aucun transpondeur puis en alternance dans le procédé de détection dans le temps, on active la troisième antenne (8) et on identifie un nombre aussi grand que possible de transpondeurs avec la seconde et la troisième antenne (6, 8) jusqu'à ce que la seconde antenne (6) n'identifie plus aucun transpondeur, puis on maintient en service la troisième antenne (8) jusqu'à ce qu'elle n'identifie plus aucun transpondeur et ensuite l'installation d'exploitation assure l'exploitation des résultats et leur émission et/ou leur enregistrement en mémoire.

12. Procédé d'identification d'objets selon la revendication 10,
**caractérisé en ce que**
l'installation d'émission et de réception (10) active tout d'abord la première antenne (4) et lors de l'identification de transpondeurs, la première antenne (4) identifie un nombre aussi grand que possible de transpondeurs, puis en alternance dans le procédé de détection dans le temps, on active la seconde antenne (6) et avec celle-ci on identifie un nombre aussi grand que possible de transpondeurs et avec l'identification des transpondeurs par la seconde antenne (6), on active la troisième antenne (8) et on coupe la première antenne (4) si celle-ci n'a plus identifié aucun transpondeur pendant une durée déterminée, on coupe la seconde antenne (6) si celle-ci n'a plus identifié aucun transpondeur pendant une durée déterminée et on maintient en service la troisième antenne (8) jusqu'à ce que celle-ci n'ait plus identifié de transpondeurs pendant une durée déterminée et ensuite l'installation d'exploitation assure l'exploitation des résultats et leur émission et/ou leur enregistrement en mémoire.

13. Procédé d'identification d'objets selon les revendications 10 à 12,
**caractérisé en ce que**
lors de l'identification de chaque transpondeur l'installation d'émission et de réception (10), émet un ordre vers ce transpondeur qui commute son mode selon lequel le transpondeur n'émet pas de réponse pendant la réception de signaux ou encore pendant la réception de signaux et pendant une durée prédéfinie.

14. Procédé d'identification d'objets selon les revendications 10 à 13,
**caractérisé en ce que**
l'installation de transfert change le sens de transfert et transféré en arrière les objets dans la zone de lecture d'une, de deux ou de trois antennes (8, 6, 4) si un nombre prédéfini de transpondeurs à identifier n'est pas atteint avec un déficit d'amplitude prédéfini, à la fin de l'opération d'identification.

15. Procédé d'identification d'objets selon les revendications 10 à 14,
**caractérisé en ce que**
l'installation de transfert modifie la disposition des transpondeurs au cours de l'opération de lecture par un profil de mouvement non linéaire dans une autre direction que la direction de transfert.
